# EUROPEAN PATENT APPLICATION

(11) **EP 1 760 487 A1**
(43) Date of publication of application: **07.03.2007**
(21) Application number: 06015256.8
(22) Date of filing: 21.07.2006
(51) Int. Cl.: G01S 5/00, G01S 5/14, G01S 5/02

(54) **Method and system for indoor positioning using mobile terminal**

(30) Priority: 29.08.2005 KR 20050079213
(71) Applicant: Samsung Electronics Co., Ltd., Suwon-si, Gyeonggi-Do (KR)
(72) Inventor: Kim, Min-Q, Seocho-gu Seoul (KR); Jeong, Min-seop, Gwanak-gu Seoul (KR)
(74) Representative: Grünecker, Kinkeldey, Stockmair & Schwanhäusser Anwaltssozietät

(57) **Abstract**

A method and system for indoor positioning using a mobile terminal, the method including designating a plurality of virtual locations using the mobile terminal while the mobile terminal is in motion; and tracking a location of a specific terminal by performing a localization measurement communication with the specific terminal based on the plurality of virtual anchor locations.

## Description

### BACKGROUND OF THE INVENTION

### 1. Field of The Invention

Methods and systems consistent with the present invention relate to an indoor positioning using a mobile terminal. More particularly, the present invention relates to a method and system for indoor positioning using a mobile terminal that receives current location information from global positioning system (GPS) satellites, designates the current location as a reference point, and tracks a location of specific terminal deployed indoors by use of a pedestrian navigation system (PNS) function and a distance measurement function based from the reference point.

### 2. Description of The Related Art

Wireless sensor network is a new emerging technology where distributed sensor nodes are wirelessly networked to sense the environment and the data is relayed to the master node for monitoring and control. Location awareness in wireless sensor networks is important since many applications such as environment monitoring depends on knowing the locations of sensor nodes. There are various localization algorithms that has been developed, and the most prevalent algorithm is trilateration. Trilateration uses the known locations of three reference points, and the measured distance between the subject and each anchor nodes (reference points) for calculating the position. In a wireless sensor network, multiple calculations of trilateration can be used to determine the position of every node in the network where three nodes are anchor nodes with known positions.

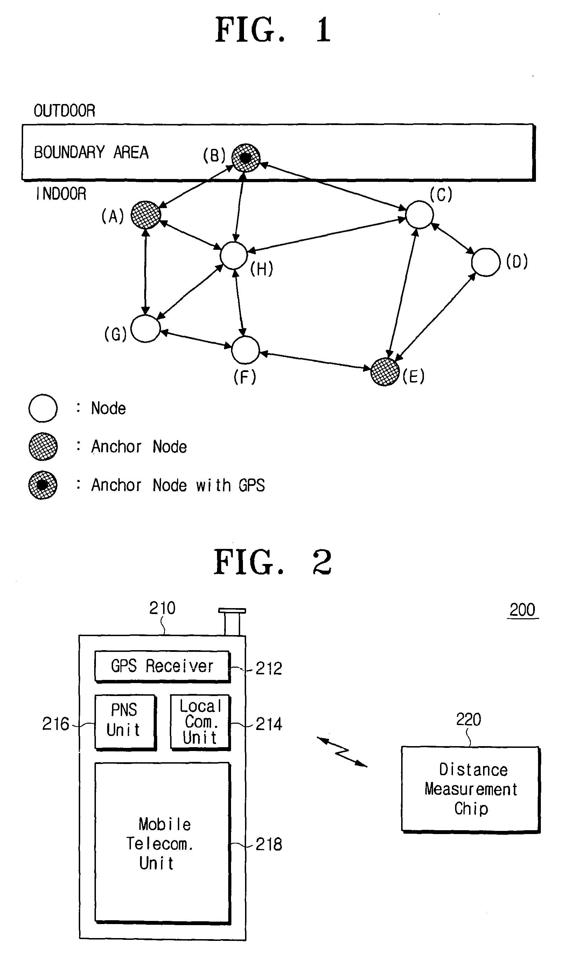

FIG. 1 depicts an example of a conventional indoor positioning

According to the conventional indoor positioning technique, nodes establishing a network measure distances and acquire the locations of the other nodes according to a localization algorithm by collecting distance information.

Three nodes A, B and E of the nodes A through H in the network should know their absolute locations to calculate absolute locations of the other nodes C, D, F, G and H. At this time, a node knowing its absolute location is called an anchor node.

Since the three anchor nodes should know their absolute locations, a service provider needs to deploy three anchor nodes A, B and E and input an absolute location of each anchor node.

Rather than inputting the absolute locations of the anchor nodes, an anchor node B having a GPS receiving function may be deployed and utilized at the boundary area between the outdoor and the indoor areas. However, equipping the anchor node with the GPS receiver incurs additional cost.

### SUMMARY OF THE INVENTION

The present invention has been provided to address the above-mentioned and other problems and disadvantages occurring in the conventional arrangement, and an aspect of the present invention is to provide a method and system for indoor positioning using a mobile terminal in a manner that receives current location information from global positioning system (GPS) satellites, designates the current location as a reference point, and tracks a location of an indoor terminal by use of a pedestrian navigation system (PNS) function and a local measurement function based on the reference point.

According to an aspect of the present invention, there is provided a method for indoor positioning using a mobile terminal, which includes designating a plurality of virtual anchor locations using the mobile terminal while the terminal is in motion; and tracking a location of a specific terminal by performing a localization measurement communication with the specific terminal based on the plurality of virtual anchor locations.

In designating a plurality of virtual anchor locations, a mobile terminal may designate a first virtual anchor location by receiving first global positioning service (GPS) location information from GPS satellites, the mobile terminal may then move a certain distance away from the first virtual anchor location and designate a=second virtual anchor location by receiving second GPS location information, and the mobile terminal may then move a certain distance away from the second virtual anchor location and designate a third virtual anchor location by receiving third GPS location information.

In designating a plurality of virtual anchor locations, a mobile terminal may designate a first virtual anchor location by receiving first GPS location information from GPS satellites, a second mobile terminal may designate a second virtual anchor location by receiving second GPS location information, and the second mobile terminal may move a certain distance away from the second virtual anchor location and designate a third virtual anchor location by receiving third GPS location information.

The mobile terminal may transmit and receive distance information to and from the specific terminal relating to: the first virtual anchor location through the localization measurement communication at the first virtual anchor location, the second virtual anchor location through the localization measurement communication at the second virtual anchor location, and the third virtual anchor location through the localization measurement communication at the third virtual anchor location.

The mobile terminal may transmit and receive distance information to and from the specific terminal relating to the first virtual anchor location through the localization measurement communication at the first virtual anchor location, the second mobile terminal may transmit and receive distance information to and from the specific terminal relating to the second virtual anchor location=through the localization measurement communication at the second virtual anchor location, and the second mobile terminal may also transmit and receive distance information to and from the specific terminal relating to the third virtual anchor location through the localization measurement communication at the third virtual anchor location.

In designating a plurality of virtual anchor locations, a mobile terminal may designate a first virtual anchor location by receiving first GPS location information, move a certain distance away from the first virtual anchor location and designate location information acquired using a pedestrian navigation system (PNS) function to a second virtual anchor location, and move a certain distance away from the second virtual anchor location and designate location information acquired using the PNS function to a third virtual anchor location.

In designating a plurality of virtual anchor locations, a mobile terminal may designate a first virtual anchor location by receiving first GPS location information, a second mobile terminal may designate a second virtual anchor location by receiving second GPS location information, and the second mobile terminal may move a certain distance away from the second virtual anchor location and designate location information acquired using the PNS function to a third virtual anchor location.

In designating a plurality of virtual anchor locations, a mobile terminal may designate a first virtual anchor location by receiving first GPS location information, move a certain distance away from the first virtual anchor location and designate a second virtual anchor location by receiving second GPS location information, and move a certain distance away from the second virtual anchor location and designate location information acquired using the PNS function to a third virtual anchor location.

The mobile terminal may transmit and receive distance information to and from the specific terminal relating to: the first virtual anchor location through the localization measurement communication at the first virtual anchor location, the second virtual anchor location to and from the specific terminal through the localization measurement communication at the second virtual anchor location, and the third virtual anchor location to and from the specific terminal through the localization measurement communication at the third virtual anchor location.

The mobile terminal may transmit and receive distance information to and from the specific terminal relating to the first virtual anchor location through the localization measurement communication at the first virtual anchor location, the second mobile terminal may transmit and receive distance information to and from the specific terminal relating to the second virtual anchor location through the localization measurement communication at the second virtual anchor location, and the second mobile terminal may also transmit and receive distance information to and from the specific terminal relating to the third virtual anchor location through the localization measurement communication=at the third virtual anchor location.

According to another aspect of the present invention, there is provided a method of tracking and displaying a location of a specific mobile terminal at a short range using a function to perform a localization measurement communication with neighboring terminals and a function to acquire location information according to a walking of a user, which includes designating a current location as a reference point to a first virtual location and informing the specific terminal of distance information relating to the reference point through the localization measurement communication; moving a certain distance away from the reference point, designating location information acquired using a pedestrian navigation system (PNS) function to a second virtual location, and informing the specific terminal of distance information relating to the second virtual location through the localization measurement communication; moving a certain distance away from the second virtual location, designating location information acquired using the PNS function to a third virtual location, and informing the specific terminal of distance information relating to the third virtual location through the localization measurement communication; and tracking the location of the specific terminal by performing the localization measurement communication with the specific terminal based on the three location information.

According to another aspect of the present invention, there is provided a system for indoor positioning including a mobile terminal including a unit that receives location information from global positioning system (GPS) satellites, a unit that performs a localization measurement communication with neighboring terminals, and a unit that acquires location information according to a walking of a user, wherein the mobile terminal designates a plurality of virtual anchor locations while in motion and tracks a location of a specific terminal by performing the localization measurement communication with the specific terminal based on the plurality of virtual anchor locations; and a distance measurement device that receives location information relating to the plurality of virtual anchor locations from the mobile terminal through the localization measurement communication, and transmits and receives distance information to and from the mobile terminal by performing the localization measurement communication with the mobile terminal.

The mobile terminal may designate a first GPS location information received from the GPS satellites as a first virtual anchor location and informs the specific terminal of distance information relating to the first virtual anchor location through the localization measurement communication, the mobile terminal may move a certain distance away from the first virtual anchor location, designate a second GPS location information received from the GPS satellites as a second virtual anchor location, and inform the specific terminal of distance information relating to the second virtual anchor location through the localization measurement communication, and the mobile terminal may move a certain distance away from the second virtual anchor location, designate a third GPS location information received from the GPS satellites to a third virtual anchor location, and inform the specific terminal of distance information relating to the third virtual anchor location through the localization measurement communication.

The mobile terminal may designate a first GPS location information received from the GPS satellites as a first virtual anchor location and informs the specific terminal of distance information relating to the first virtual anchor location through the localization measurement communication, the second mobile terminal may designate a second GPS location information received from the GPS satellites as a second virtual anchor location, and inform the specific terminal of distance information relating to the second virtual anchor location through the localization measurement communication, and the second mobile terminal may move a certain distance away from the second virtual anchor location, designate a third GPS location information received from the GPS satellites as a third virtual anchor location, and inform the specific terminal of distance information relating to the third virtual anchor location through the localization measurement communication.

The mobile terminal may designate a first GPS location information received from the GPS satellites as a first virtual anchor location and informs the specific terminal of distance information relating to the first virtual anchor location through the localization measurement communication, the mobile terminal may then move a certain distance away from the first virtual anchor location, designate a second GPS location information acquired using a pedestrian navigation system (PNS) function as a second virtual anchor location, and informs the specific terminal of distance information relating to the second virtual anchor location through the localization measurement communication, and the mobile terminal may move a certain distance away from the second virtual anchor location, designate a third GPS location information acquired using the PNS function as a third virtual anchor location, and informs the specific terminal of distance information relating to the third virtual anchor location through the localization measurement communication.

The mobile terminal may designate a first GPS location information received from the GPS satellites as a first virtual anchor location and informs the specific terminal of distance information relating to the first virtual anchor location through the localization measurement communication, the second mobile terminal may designate a second GPS location using information received from the GPS satellites as a second virtual anchor location, and informs the specific terminal of distance information relating to the second virtual anchor location through the localization measurement communication, and the second mobile terminal may move a certain distance away from the second virtual anchor location, designate a third GPS location using information acquired using the PNS function to a third virtual anchor location, and informs the specific terminal of distance information relating to the third virtual anchor location through the localization measurement communication.

The mobile terminal may designate a first GPS location information received from the GPS satellites to a first virtual anchor location and informs the specific terminal of distance information relating to the first virtual anchor location through the localization measurement communication, the mobile terminal may move a certain distance away from the first virtual anchor location, designate a second GPS location information received from the GPS satellites to a second virtual anchor location, and inform the specific terminal of distance information relating to the second virtual anchor location through the localization measurement communication, and the mobile terminal may move a certain distance away from the second virtual anchor location, designate a third GPS location information acquired using the PNS function to a third virtual anchor location, and inform the specific terminal of distance information relating to the third virtual anchor location through the localization measurement communication.

According to another aspect of the present invention, there is provided a system for indoor positioning, including a mobile terminal that includes a distance measurement unit that transmits and receives distance information to and from neighboring terminals through a localization measurement communication and a pedestrian navigation system (PNS) unit to acquire location information according to a motion of a user, wherein the mobile terminal designates a current location as a reference point, designates a plurality of virtual locations using the PNS function while in motion, and tracks a location of a specific terminal by performing the localization measurement communication with the specific terminal based on three virtual locations; and=a distance measurement device which receives location information relating to the plurality of virtual locations, respectively, from the mobile terminal through the localization measurement communication, transmits and receives distance information to and from the mobile terminal by performing the localization measurement communication with the mobile terminal.

The mobile terminal may designate the reference point to a first virtual location, move a certain distance away from the first virtual location, designate a location information acquired using the PNS function to a second virtual location, and inform distance information relating to the second virtual location to the specific terminal through the localization measurement communication, and the mobile terminal may move a certain distance away from the second virtual location, designate a location information acquired using the PNS function to a third virtual location, and inform distance information relating to the third virtual location to the specific terminal through the localization measurement communication.

### BRIEF DESCRIPTION OF THE DRAWINGS

These and/or other aspects of the invention will become apparent and more readily appreciated from the following description of exemplary embodiments, taken in conjunction with the accompanying drawing figures of which:

FIG. 1 is a diagram of a conventional indoor positioning technique;

FIG. 2 is a schematic block diagram of an indoor positioning system using a mobile terminal according to an exemplary embodiment of the present invention;

FIG. 3 is a flowchart outlining an indoor positioning method using a mobile terminal according to an exemplary embodiment of the present invention;

FIG. 4 is a diagram depicting how to designate GPS location information to a virtual anchor location according to an exemplary embodiment of the present invention;

FIG. 5 is a flowchart outlining an indoor positioning method using a mobile terminal according to an exemplary embodiment of the present invention;

FIG. 6 is a flowchart outlining an indoor positioning method using a mobile terminal according to an exemplary embodiment of the present invention; and

FIG. 7 is a diagram depicting how to track a location of a specific terminal based on locations of three virtual anchors arbitrarily defined according to an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and element descriptions, are provided to assist in a comprehensive understanding of the invention. Also, well-known functions or constructions are not described in detail since they would obscure the invention in unnecessary detail.

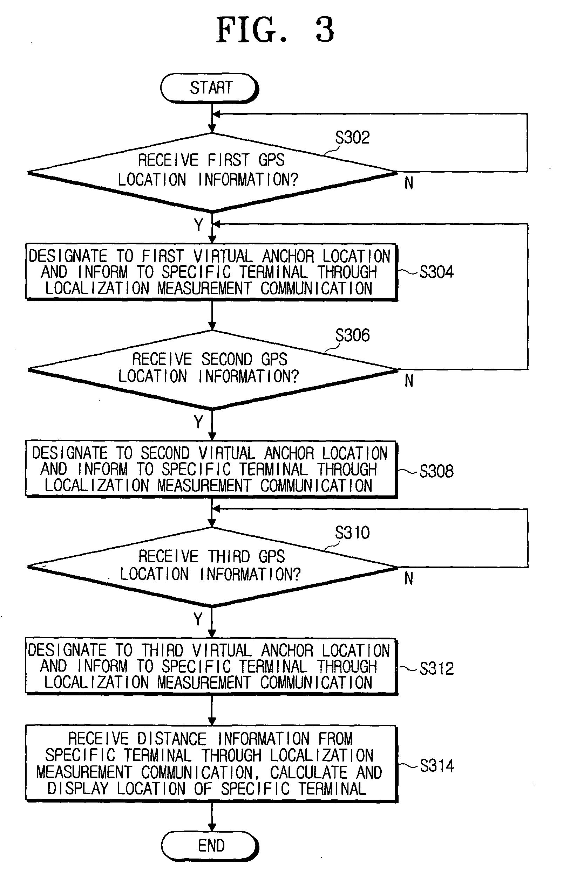

FIG. 2 is a schematic block diagram of an indoor positioning system using a mobile terminal according to an exemplary embodiment of the present invention.

The indoor positioning system 200 includes a mobile terminal 210 and a distance measurement device 220. The mobile terminal 210 designates the locations of three virtual anchors while in motion, and tracks a location of a specific terminal by performing a localization measurement communication with the specific terminal based on the locations of the three virtual anchors. The distance measurement device 220 receives location information relating to the three virtual anchors from the mobile terminal 210 through the localization measurement communication, transmits and receives distance information relating to the mobile terminal 210 by performing the localization measurement communication with the mobile terminal 210.

The mobile terminal 210 includes a global positioning service (GPS) receiver 212 which receives location information from GPS satellites, a location communication unit 214 which performs localization measurement communications with neighbor terminals, a pedestrian navigation system (PNS) unit 216 which acquires location information according to a movement of a user, and a mobile telecommunication unit 218 which communicates with the specific mobile terminal over a mobile communication network.

The local communication unit 214 transmits and receives location information by communicating with a terminal deployed at a short distance over a wireless personal area network (WPAN), for example, according to the IEEE 802.15.4a standard.

The PNS unit 216 is capable of calculating a location of the user by detecting the walking of the user who carries the mobile terminal 210. The PNS unit 216 detects a pace of the user by detecting the motion generated due to the movement of the user by use of a pedestrian sensor attached to the user and converting the motion to a signal, detects a movement direction using a geomagnetic sensor, and thus calculates the location of the user based on pace, direction, acceleration and so on. Note that the PNS unit 216 may be implemented as a separate device rather than embedded in the mobile terminal 210.

The distance measurement device 220 carries out the same function as the location communication unit 214 of the mobile terminal 210. The distance measurement device 220 can be attached as a chip to portables such as mobile terminal, personal digital assistant (PDA), electronic note, bag, necklace and so on.

The mobile terminal 210 designates locations of the three virtual anchors, including more than one absolute location or relative location, in the following manner. Herein, the "absolute location" denotes an actual location that can be accurately indicated by latitude, longitude and the like, or a fixed location without movement change. In contrast, the "relative location" can denote a virtual location obtained using the localization measurement communication or the PNS function based on the absolute location.

First, for every movement of a certain distance, one mobile terminal 210 can designate the locations of the three anchors by receiving location information from the GPS satellites through the GPS receiver 212.

Second, the location information received from the GPS satellites is designated to a first anchor location, and the location information that a second mobile terminal receives from the GPS satellites is designated to a second anchor location. In this state, the mobile terminal 210 or the second mobile terminal moves for a distance and then receives location information from the GPS satellites. This location information is set to a third anchor location.

Third, the GPS location information received by the mobile terminal 210 is set to a first anchor location (absolute location). Location information which is received through the PNS unit 216 after moving more than a certain distance from the first anchor location is designated to a second anchor location (relative location). Location information which is received through the PNS unit 216 after moving more than a certain distance from the second anchor location is designated to a third anchor location (relative location).

Fourth, GPS location information which are received by the mobile terminal 210 and the second mobile terminal, are set to a first anchor location (absolute location) and a second anchor location (absolute location), respectively. Location information which is received through the PNS unit 216 after the mobile terminal 210 or the second mobile terminal moves more than a certain distance, is set to a third anchor location (relative location).

Fifth, GPS location information received by the mobile terminal 210 at the current location is set to a first anchor location (absolute location), and GPS location information re-received after moving away from the first anchor location more than a certain distance, is set to a second anchor location (absolute location). GPS location information received through the PNS unit 216 after moving away from the second anchor location more than a certain distance, is set to a third anchor location (relative location).

Sixth, the PNS unit 216 is utilized regardless of whether the mobile terminal 210 is placed indoors or outdoors. The mobile terminal 210 designates the current location which is a reference point (0, 0), to a first anchor location (relative location). The mobile terminal 210 designates a second anchor location (relative location) as location information obtained through the PNS unit 216 after moving away from the first anchor location more than a certain distance. The mobile terminal 210 designates a third anchor location (relative location) to location information obtained through the PNS unit 216 after moving=away from the second anchor location more than a certain distance.

FIG. 3 is a flowchart outlining an indoor positioning method using a mobile terminal according to an exemplary embodiment of the present invention.

According to an exemplary embodiment of the present invention, the mobile terminal 210 is placed in the boundary area between the indoor and the outdoor area, receives only GPS location information through the GPS receiver 212 which moves around the boundary area, designates locations of the three virtual anchors, and performs the localization measurement communication with the neighboring distance measurement device 220. In doing so, it is assumed that the distance measurement device 220 is equipped to the specific terminal that the user of the mobile terminal 210 intends to search.

First, the mobile terminal 210 receives first GPS location information from the GPS satellites through the GPS receiver 212 at its current location (S302).

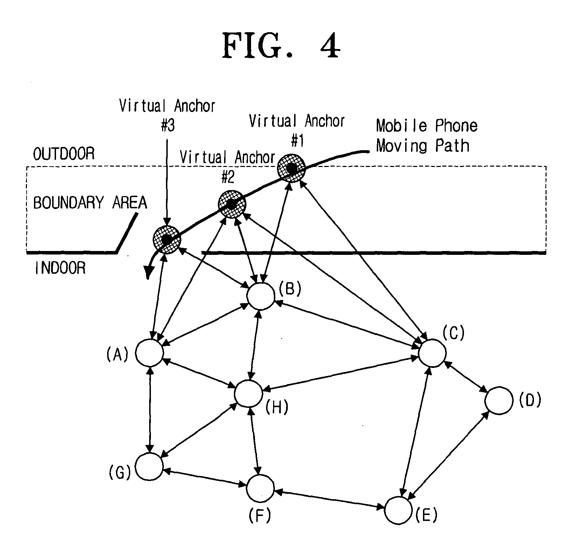

The mobile terminal 210 designates the first GPS location information as a first virtual anchor location as shown in FIG. 4, and informs other terminals including the distance measurement device 220 of the first GPS location information through the localization measurement communication (S304). The distance measurement device 220 acquires and temporarily stores distance information relating to the mobile terminal 210. It is understood that the other terminals may be mobile terminals, or communication nodes (A)-(H) which have fixed location information in the stationary state.

Because of the movement of the user, the mobile terminal 210 moves more than a certain distance from the first virtual anchor location and receives second GPS location information from the GPS satellites via the GPS receiver 212 (S306).

As shown in FIG. 4, the mobile terminal 210 designates the second GPS location information to a second virtual anchor location and informs the other terminals including the distance measurement device 220 of the second GPS location information through the localization measurement communication (S308). Likewise, the distance measurement device 220 acquires and temporarily stores distance information relating to the mobile terminal 210.

Because of the movement of the user, the mobile terminal 210 moves away from the second virtual anchor location more than a certain distance and receives third GPS location information from the GPS satellites via the GPS receiver 212 (S310).

As shown in FIG. 4, the mobile terminal 210 designates the third GPS location information to a third virtual anchor location and informs the other terminals including the distance measurement device 220 of the third GPS location information through the localization measurement communication (S312). Likewise, the distance measurement device 220 acquires and temporarily stores distance information relating to the mobile terminal 210.

The mobile terminal 210 receives the distance information from the distance measurement device 220 according to the first, second and third virtual anchor locations by performing the localization measurement communication with the distance measurement device 220, and calculates the location of the specific terminal having the distance measurement device 220 by use of triangulation based on the distance information of the first, second and third virtual anchors. Next, the mobile terminal 210 displays the calculated location onto a display unit (not shown) together with its location (S314).

Meanwhile, in an exemplary embodiment of the present invention, one mobile terminal 210 and other two mobile terminals are placed in the boundary area, each receive GPS location information from the GPS satellites, each designate the GPS location information to virtual anchor locations, and thus track the location of the specific terminal based on the three virtual anchor locations.

In addition, in an exemplary embodiment of the present invention, one mobile terminal 210 and a second mobile terminal are placed in the boundary area, each receive GPS location information from the GPS satellites, and set the two GPS location information to first and second virtual anchor locations. After either the mobile terminal 210 or the specific terminal moves more than a certain distance, it designates GPS location information received from the GPS satellites at the changed location, to a third virtual anchor location to thus track the location of the specific terminal based on the three virtual anchor locations.

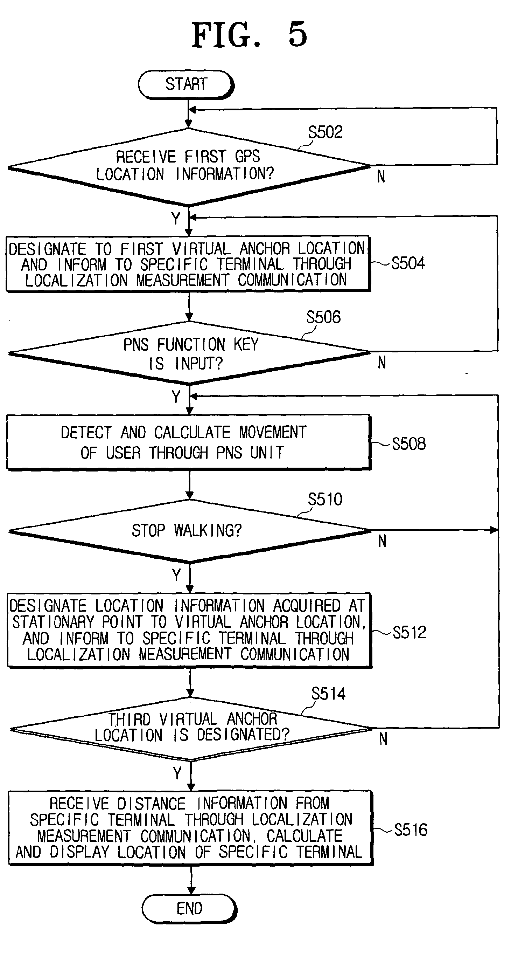

FIG. 5 is a flowchart outlining an indoor positioning method using a mobile terminal according to another exemplary embodiment of the present invention.

According to another exemplary embodiment of the present invention, the mobile terminal 210 receives GPS location information through the GPS receiver 212 while moving about the boundary area of the indoor and the outdoor, and designates the GPS location information as a first virtual anchor location. Whenever the mobile terminal 210 moves more than a certain distance away from the first virtual anchor location, the mobile terminal 210 designates the location information acquired by the PNS unit 216 as second and third virtual anchor locations, respectively. Thus, the mobile terminal 210 performs the localization measurement communication with the neighboring distance measurement device 220 based on the virtual anchor locations.

First, the mobile terminal 210 receives first GPS location information from the GPS satellites through the GPS receiver 212 at the current location (S502).

The mobile terminal 210 designates the first GPS location information as a first virtual anchor location as shown in FIG. 4, and informs other terminals including the distance measurement device 220 of the first GPS location information through the localization measurement communication via the distance measurement unit 220 (S504). The distance measurement device 220 acquires and temporarily stores distance information relating to the mobile terminal 210. It is understood that the other terminals may be mobile terminals, or communication nodes (A)-(H) which have fixed location information in the stationary state.

In case that the user of the mobile terminal 210 moves from the outdoor to the indoor area, a key is input in relation with the execution of the PNS function to use the PNS function because it is impossible to receive the GPS location information indoors (S506).

Accordingly, the mobile terminal 210 can calculate its location through the PNS unit 216 based on signals detected by a pedestrian sensor and a geomagnetic sensor whenever the user moves around (S508).

When the mobile terminal 210 is moved away from the first virtual anchor location more than a certain distance and remains still (S510), the mobile terminal 210 designates location information which is calculated at the stationary point by the PNS unit 216, as a second virtual anchor location, and informs the other terminals including the distance measurement device 220 of the second virtual anchor location through the localization measurement communication via the local communication unit 214 (S512). The distance measurement device 220 temporarily stores distance information relating to the mobile terminal 210 which is received through the localization measurement communication.

Next, the mobile terminal 210 moves more than a certain distance away from the second virtual anchor location and repeats the pedestrian calculation until location information calculated by the PNS unit 216 is set as a third virtual anchor location (S514).

Subsequently, the mobile terminal 210 receives the acquired distance information according to the first, second and third virtual anchor locations from the distance measurement device 220 by performing the localization measurement communication with the distance measurement device 220, calculates the location of the specific terminal equipped with the distance measurement device 220 by use of the triangulation based on the three location information, and displays the location of the specific terminal on the display unit (not shown) together with its location (S516).

In an exemplary embodiment of the present invention, one mobile terminal 210 and a second mobile terminal are placed in the boundary area, each receive GPS location information from the GPS satellites, and each set the GPS location information to first and second virtual anchor locations. After either the mobile terminal 210 or the specific terminal moves more than a certain distance from the first or second virtual anchor location, it designates GPS location information received from the GPS satellites through the PNS unit 216 as a third virtual anchor location to thus track the location of the specific terminal based on the three virtual anchor locations.

In addition, in another exemplary embodiment of the present invention, the mobile terminal 210 is placed in the boundary area, receives GPS location information from the GPS satellites, and designates the GPS location information as a first virtual anchor location. After moving more than a certain distance, the mobile terminal 210 designates GPS location information received from the GPS satellites as a second virtual anchor location. After further moving away from the second virtual anchor location more than a certain distance, the mobile terminal 210 designates location information acquired through the PNS unit 216 as a third virtual anchor location. Thus, the mobile terminal 210 can track location of the specific terminal based on the three virtual anchor locations.

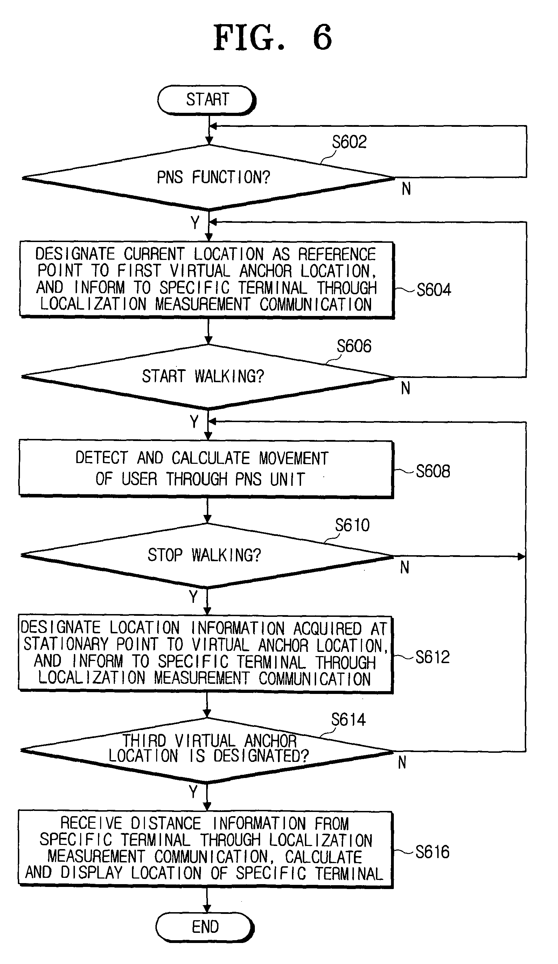

FIG. 6 is a flowchart outlining an indoor positioning method using a mobile terminal according to an exemplary embodiment of the present invention.

According to an exemplary embodiment of the present invention, the mobile terminal 210 designates location information acquired by the PNS unit 216 at every movement as three virtual anchor locations regardless of whether it is placed indoors or outdoors, and performs the localization measurement communication with the neighboring distance measurement device 220 based on the three virtual anchor locations.

First, the user of the mobile terminal 210 inputs a key relating to the PNS function to direct the mobile terminal 210 to execute the PNS function (S602).

Accordingly, the mobile terminal 210 designates a first virtual anchor location based on a reference (0, 0) which is the current location and informs other terminals including the distance measurement device 220 of the first virtual location information through the localization measurement communication (S604). At this time, the distance measurement device 220 acquires and temporarily stores distance information relating to the mobile terminal.

Upon detecting the movement of the user through the pedestrian sensor (S606), the mobile terminal 210 calculates its location based on signals detected using the pedestrian sensor and the geomagnetic sensor at the PNS unit 216 whenever the user moves around (S608).

When the user moves more than a certain distance away from the first virtual anchor location and stops moving (S610), the mobile terminal 210 designates location information calculated through the PNS unit 216 at the stationary point as a second virtual anchor location, and informs other terminals including the distance measurement device 220 of the second virtual anchor location through the localization measurement communication via the local communication unit 214 (S612). The distance measurement device 220 receives through the localization measurement communication and temporarily stores distance information relating to the mobile terminal 210.

Next, after moving more than a certain distance away from the second virtual anchor location, the mobile terminal 210, at the stationary point, repeats the pedestrian calculation until location information calculated by the PNS unit 216 is designated as a third virtual anchor location (S614).

Subsequently, the mobile terminal 210 receives the acquired distance information according to the first, second and third virtual anchor locations from the distance measurement device 220 by performing the localization measurement communication with the distance measurement device 220, calculates the location of the specific terminal by use of the triangulation based on the three location information, and displays the location of the specific terminal together with its location (S616).

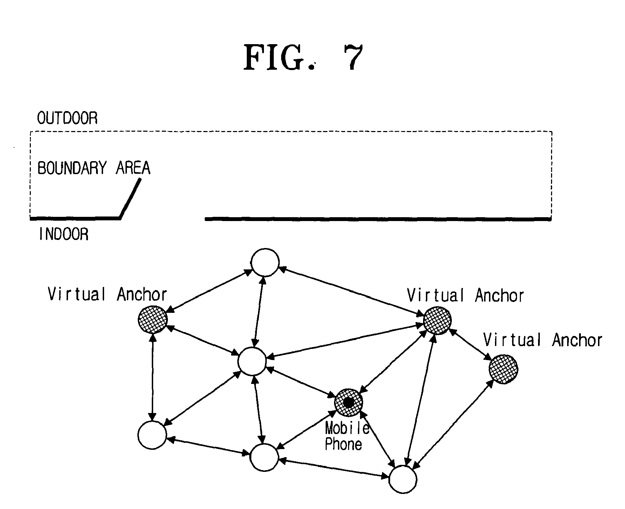

Referring to FIG. 7, in case that the mobile terminal 210 is placed indoors and all communication nodes have fixed location information, the mobile terminal 210 transmits and receives distance information to and from three arbitrary communication nodes through the localization measurement communication, designates three anchor locations with respect to the three communication nodes, calculates its location and the location of the specific terminal based on the three distance information received, and thus displays the calculated locations.

As set forth above, it is possible to implement the method and system for indoor positioning using a mobile terminal, which is placed outdoors, receiving current location information using the GPS function, designating the received location information to a reference point, and tracking a location of a specific indoor terminal using the PNS function and the distance measurement function based on the reference point. Therefore, there is no need to input location data to a communication node to set a fixed location indoors and to additionally provide the GPS receiver to the communication node. Furthermore, the user can easily find other persons by use of the mobile terminal indoors or outdoors among a large number of people.

While the present invention has been particularly shown and described with reference to exemplary embodiments thereof, it will be understood by those skilled in the art that various changes in form and details may be made therein without departing from the spirit and scope of the invention as defined by the appended claims.

## Claims

1. A method for indoor positioning using a mobile terminal, the method comprising:
designating a plurality of virtual anchor locations using the mobile terminal while the mobile terminal is in motion; and
tracking a location of a specific terminal by performing a localization measurement communication with the specific terminal based on the plurality of virtual anchor locations.

2. The method of claim 1, wherein, in designating a plurality of virtual anchor locations, the mobile terminal designates a first virtual anchor location by receiving first global positioning service (GPS) location information from GPS satellites,
the mobile terminal moves a certain distance away from the first virtual anchor location and designates a second virtual anchor location by receiving second GPS location information, and
the mobile terminal moves a certain distance away from the second virtual anchor location and designates a third virtual anchor location by receiving third GPS location information.

3. The method of claim 1, wherein, in designating a plurality of virtual anchor locations, the mobile terminal designates a first virtual anchor location by receiving first GPS location information from GPS satellites,
a second mobile terminal designates a second virtual anchor location by receiving second GPS location information, and
the second mobile terminal moves a certain distance from the second virtual anchor location and designates a third virtual anchor location by receiving third GPS location information.

4. The method of claim 2, wherein the mobile terminal transmits and receives distance information to and from the specific terminal relating to the first virtual anchor location through the localization measurement communication at the first virtual anchor location,
the mobile terminal transmits and receives distance information to and from the specific terminal relating to the second virtual anchor location through the localization measurement communication at the second virtual anchor location, and
the mobile terminal transmits and receives distance information to and from the specific terminal relating to the third virtual anchor location through the localization measurement communication at the third virtual anchor location.

5. The method of claim 3, wherein the mobile terminal transmits and receives distance information to and from the specific terminal relating to the first virtual anchor location through the localization measurement communication at the first virtual anchor location,
the second mobile terminal transmits and receives distance information to and from the specific terminal relating to the second virtual anchor location through the localization measurement communication at the second virtual anchor location, and
the second mobile terminal transmits and receives distance information to and from the specific terminal relating to the third virtual anchor location through the localization measurement communication at the third virtual anchor location.

6. The method of claim 1, wherein, in designating a plurality of virtual anchor locations, a mobile terminal designates a first virtual anchor location by receiving first GPS location information,
the mobile terminal moves a certain distance away from the first virtual anchor location and designates location information acquired using a pedestrian navigation system (PNS) function as a second virtual anchor location, and
the mobile terminal moves a certain distance away from the second virtual anchor location and designates location information acquired using the PNS function as a third virtual anchor location.

7. The method of claim 1, wherein, in designating a plurality of virtual anchor locations, a mobile terminal designates a first virtual anchor location by receiving first GPS location information,
a second mobile terminal designates a second virtual anchor location by receiving second GPS location information, and
the second mobile terminal moves a certain distance away from the second virtual anchor location and designates location information acquired using the PNS function as a third virtual anchor location.

8. The method of claim 1, wherein, in designating a plurality of virtual anchor locations, a mobile terminal designates a first virtual anchor location by receiving first GPS location information,
the mobile terminal moves a certain distance away from the first virtual anchor location and designates a second virtual anchor location by receiving second GPS location information, and
the mobile terminal moves a certain distance away from the second virtual anchor location and designates location information acquired using the PNS function as a third virtual anchor location.

9. The method of claim 6, wherein the mobile terminal transmits and receives distance information to and from the specific terminal relating to the first virtual anchor location through the localization measurement communication at the first virtual anchor location,
the mobile terminal transmits and receives distance information to and from the specific terminal relating to the second virtual anchor location through the localization measurement communication at the second virtual anchor location, and
the mobile terminal transmits and receives distance information to and from the specific terminal relating to the third virtual anchor location through the localization measurement communication at the third virtual anchor location.

10. The method of claim 7, wherein the mobile terminal transmits and receives distance information to and from the specific terminal relating to the first virtual anchor location through the localization measurement communication at the first virtual anchor location,
the other mobile terminal transmits and receives distance information to and from the specific terminal relating to the second virtual anchor location through the localization measurement communication at the second virtual anchor location, and
the other mobile terminal transmits and receives distance information to and from the specific terminal relating to the third virtual anchor location through the localization measurement communication at the third virtual anchor location.

11. The method of claim 8, wherein the mobile terminal transmits and receives distance information to and from the specific terminal relating to the first virtual anchor location through the localization measurement communication at the first virtual anchor location,
the mobile terminal transmits and receives distance information to and from the specific terminal relating to the second virtual anchor location through the localization measurement communication at the second virtual anchor location, and
the mobile terminal transmits and receives distance information to and from the specific terminal relating to the third virtual anchor location through the localization measurement communication at the third virtual anchor location.

12. A method of tracking and displaying a location of a specific mobile terminal at a short range, the method comprising:
designating a current location as a reference point to a first virtual location and informing the specific mobile terminal of distance information relating to the reference point through a localization measurement communication;
moving a certain distance away from the reference point, designating location information acquired using a pedestrian navigation system (PNS) function as a second virtual location, and informing the specific terminal of distance information relating to the second virtual location through a localization measurement communication;
moving a certain distance away from the second virtual location, designating location information acquired using the PNS function as a third virtual location, and informing the specific mobile terminal of distance information relating to the third virtual location through a localization measurement communication; and
tracking the location of the specific terminal by performing a localization measurement communication with the specific mobile terminal based on the location information of the three virtual locations.

13. A system for indoor positioning comprising:
a mobile terminal which designates a plurality of virtual anchor locations while in motion and tracks a location of a specific terminal by performing a localization measurement communication with the specific terminal based on the plurality of virtual anchor locations; and
a distance measurement device which receives location information relating to the plurality of virtual anchor locations from the mobile terminal through the localization measurement communication, and transmits and receives distance information to and from the mobile terminal by performing the localization measurement communication with the mobile terminal.

14. The system of claim 13, wherein the mobile terminal receives location information from global positioning system (GPS) satellites, performs the localization measurement communication with neighboring terminals, and acquires additional location information according to the movement of a user.

15. The system of claim 14, wherein the mobile terminal designates a first GPS location information received from the GPS satellites as a first virtual anchor location and informs the specific terminal of distance information relating to the first virtual anchor location through the localization measurement communication,
the mobile terminal moves a certain distance away from the first virtual anchor location, designates a second GPS location information received from the GPS satellites as a second virtual anchor location, and informs the specific terminal of distance information relating to the second virtual anchor location through the localization measurement communication, and
the mobile terminal moves a certain distance away from the second virtual anchor location, designates a third GPS location information received from the GPS satellites as a third virtual anchor location, and informs the specific terminal of distance information relating to the third virtual anchor location through the localization measurement communication.

16. The system of claim 14, wherein the mobile terminal designates a first GPS location information received from the GPS satellites as a first virtual anchor location and informs the specific terminal of distance information relating to the first virtual anchor location through the localization measurement communication,
a second mobile terminal designates a second GPS location information received from the GPS satellites as a second virtual anchor location, and informs the specific terminal of distance information relating to the second virtual anchor location through the localization measurement communication, and
the second mobile terminal moves a certain distance away from the second virtual anchor location, designates a third GPS location information received from the GPS satellites as a third virtual anchor location, and informs the specific terminal of distance information relating to the third virtual anchor location through the localization measurement communication.

17. The system of claim 14, wherein the mobile terminal designates a first GPS location information received from the GPS satellites as a first virtual anchor location and informs the specific terminal of distance information relating to the first virtual anchor location through the localization measurement communication,
the mobile terminal moves a certain distance away from the first virtual anchor location, designates a second GPS location information acquired using a pedestrian navigation system (PNS) function as a second virtual anchor location, and informs the specific terminal of distance information relating to the second virtual anchor location through the localization measurement communication, and
the mobile terminal moves a certain distance away from the second virtual anchor location, designates a third GPS location information acquired using the PNS function as a third virtual anchor location, and informs the specific terminal of distance information relating to the third virtual anchor location through the localization measurement communication.

18. The system of claim 14, wherein the mobile terminal designates a first GPS location information received from the GPS satellites as a first virtual anchor location and informs the specific terminal of distance information relating to the first virtual anchor location through the localization measurement communication,
second mobile terminal designates a second GPS location information received from the GPS satellites as a second virtual anchor location, and informs the specific terminal of distance information relating to the second virtual anchor location through the localization measurement communication, and
the second mobile terminal moves a certain distance away from the second virtual anchor location, designates a third GPS location information acquired using the PNS function as a third virtual anchor location, and informs the specific terminal of distance information relating to the third virtual anchor location through the localization measurement communication.

19. The system of claim 14, wherein the mobile terminal designates a first GPS location information received from the GPS satellites to a first virtual anchor location and informs the specific terminal of distance information relating to the first virtual anchor location through the localization measurement communication,
the mobile terminal moves a certain distance away from the first virtual anchor location, designates a second GPS location information received from the GPS satellites to a second virtual anchor location, and informs the specific terminal of distance information relating to the second virtual anchor location through the localization measurement communication, and
the mobile terminal moves a certain distance away from the second virtual anchor location, designates a third GPS location information acquired using the PNS function to a third virtual anchor location, and informs the specific terminal of distance information relating to the third virtual anchor location through the localization measurement communication.

20. A system for indoor positioning, comprising:
a mobile terminal which designates a current location to a reference point, designates a plurality of virtual locations using a pedestrian navigation system (PNS) while in motion, and tracks a location of a specific terminal by performing a localization measurement communication with the specific terminal based on three virtual locations, the mobile terminal comprising:
a distance measurement unit to transmit and receive distance information to and from neighboring terminals through a localization measurement communication and
a pedestrian navigation system (PNS) unit to acquire location information according to a movement of a user,
; and
a distance measurement device which receives location information relating to the plurality of virtual locations, respectively, from the mobile terminal through the localization measurement communication, transmits and receives distance information to and from the mobile terminal by performing the localization measurement communication with the mobile terminal.

21. The system of claim 20, wherein the mobile terminal designates the reference point to a first virtual location, moves a certain distance away from the first virtual location, designates location information acquired using the PNS function as a second virtual location, and informs distance information relating to the second virtual location to the specific terminal through the localization measurement communication, and
the mobile terminal moves a certain distance away from the second virtual location, designates location information acquired using the PNS function as a third virtual location, and informs distance information relating to the third virtual location to the specific terminal through the localization measurement communication.
